# FASCICULE DE BREVET EUROPEEN

(11) **EP 2 370 278 B1**
(45) Date de publication et mention de la délivrance du brevet: **21.11.2012**
(21) Numéro de dépôt: 09801501.9
(22) Date de dépôt: 07.12.2009
(51) Int. Cl.: B60H 1/00

(54) **DISPOSITIF POUR REFROIDIR LES BATTERIES D'UN VEHICULE NOTAMMENT ELECTRIQUE ET VEHICULE EQUIPE D'UN TEL DISPOSITIF**
VORRICHTUNG ZUM KÜHLEN DER BATTERIEN EINES FAHRZEUGS, INSBESONDERE EINES ELEKTROFAHRZEUGS, UND MIT SOLCH EINER VORRICHTUNG AUSGESTATTETES FAHRZEUG
DEVICE FOR COOLING THE BATTERIES OF A VEHICLE, IN PARTICULAR AN ELECTRIC VEHICLE, AND VEHICLE EQUIPPED WITH SUCH A DEVICE

(30) Priorité: 30.12.2008 FR 0859128
(43) Date de publication de la demande: 05.10.2011
(73) Titulaire: Renault S.A.S., 92100 Boulogne-Billancourt (FR)
(72) Inventeur: DUBIEF, Flavien, 2000 Neuchatel (CH); ORIGUCHI, Masato, 78120 Rambouillet (FR); YU, Robert, 78180 Montigny Le Bretonneux (FR)
(86) Numéro de dépôt international: PCT/FR2009/052421
(87) Numéro de publication internationale: WO 2010/076451

(56) Documents cités:
- EP-A- 1 906 126
- WO-A-03/031884
- US-A1- 2005 167 169

## Description

La présente invention concerne un dispositif pour refroidir la ou les batteries d'un véhicule automobile notamment électrique, du type hybride ou tout électrique.

Les véhicules à moteur électrique sont alimentés en énergie électrique par une batterie dont la durée de vie est primordiale compte tenu de son prix initial.

Ces batteries électrochimiques, très sensibles aux variations de température, sont généralement conçues pour fonctionner de manière optimale dans une gamme de température de 20 à 40°C, voire de 20 à 30°C.

Une température supérieure à 40°C permet d'améliorer les performances d'une batterie au lithium mais augmente sa vitesse de dégradation, une température de 40°C étant déjà élevée pour assurer une longue durée de vie.

Une température supérieure à 40°C pour une batterie de type NiMH (ou NiCd) affecte la capacité de charge de la batterie et accélère sa montée en température.

En raison de leur taille et poids relativement importants (typiquement 15 à 20 kWh pour une batterie de 150 à 200 kg assurant une autonomie de 100 à 150 km), ces batteries montent lentement en température mais sont difficiles à refroidir.

La génération de chaleur étant proportionnelle au carré du courant électrique et la puissance étant proportionnelle au courant, la génération de chaleur est proportionnelle au carré de la puissance.

Une charge très rapide de la batterie (en une quinzaine de minutes) peut donc provoquer une génération de chaleur très importante dans la batterie.

Dans le cas d'un système de charge rapide de la batterie, le conducteur peut utiliser le véhicule plusieurs fois dans la même journée en chargeant rapidement la batterie après sa décharge complète suite à l'utilisation du véhicule.

Dans ce cas, la température de la batterie va augmenter de plus en plus jusqu'à atteindre la température autorisée maximale, la batterie n'ayant pas le temps de refroidir entre deux cycles de charge rapide de la batterie.

Il est alors nécessaire de refroidir la batterie afin de préserver sa durée de vie.

Le document US 5 834 132 propose un système de régulation de la température d'une batterie de véhicule automobile.

Ce système prévoit un circuit de refroidissement circulant entre les cellules de la batterie, ce circuit étant alimenté en fluide de refroidissement par un réservoir.

Une pompe est nécessaire pour assurer la circulation du fluide de refroidissement.

Le fluide est refroidi par l'air extérieur au moyen d'un radiateur et d'un ventilateur associé.

Toutefois, afin d'assurer un refroidissement efficace, les dimensions du radiateur et la capacité du ventilateur doivent être importantes, les différences de température entre l'air extérieur et le fluide et entre la batterie et le fluide étant relativement faibles.

Il en résulte un encombrement et un poids relativement important d'un tel système, qui de plus est complexe et coûteux en raison du circuit de refroidissement, de la pompe, du radiateur et du ventilateur de tailles importantes, des valves nécessaires.

En outre, un tel système n'est pas suffisamment efficace pour refroidir la batterie en cas de charges rapides successives en raison de la génération de chaleur très importante en un temps très court.

Un autre dispositif de refroidissement connu utilise pour refroidir la ou les batteries, le système de climatisation du véhicule.

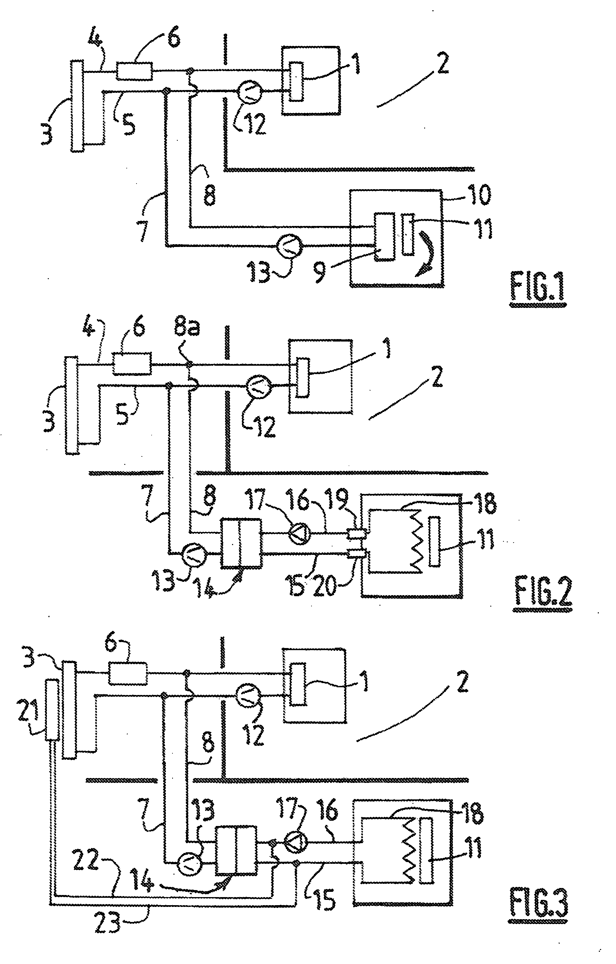

Ce dispositif équipe les véhicules du type Ford Escape et est schématisé sur la figure 1.

Ce dispositif comprend un évaporateur 1 situé dans l'habitacle 2 qui est relié au condenseur 3 situé à l'extérieur de l'habitacle par deux conduits 4, 5 dans lesquels circule un fluide frigorigène, tel que du fréon qui est comprimé dans un compresseur 6.

Les deux conduits 4, 5 sont reliés à deux conduits 7, 8 de dérivation qui sont reliés à un évaporateur 9 qui refroidit l'intérieur d'une bac 10 renfermant les batteries 11.

Les détenteurs 12, 13 permettent de régler la circulation du fluide frigorigène dans les conduits 4, 5 et 7, 8.

Ce dispositif de refroidissement nécessite ainsi un second évaporateur 9, ce qui le rend encombrant et coûteux à réaliser.

Pour remédier à ces inconvénients, le document WO 03/031 884, qui est considéré comme l'art antérieur le plus proche, divulgue un dispositif pour refroidir la ou les batteries d'un véhicule automobile, en particulier d'un véhicule électrique, ce véhicule comprenant un climatiseur dans lequel l'évaporateur et le condenseur sont reliés entre eux par un circuit principal dans lequel circule un fluide frigorigène, ce circuit principal étant relié à un circuit de dérivation pour acheminer le fluide frigorigène vers la ou les batteries pour refroidir celles-ci, ledit dispositif étant constitué de telle sorte qu'en amont de la ou des batteries est disposé un échangeur fluide frigorigène-eau adapté pour réaliser un échange thermique entre le fluide frigorigène circulant dans le circuit de dérivation et l'eau circulant dans une boucle disposée en condition d'échange thermique avec la ou les batteries.

Cette boucle d'eau permet de refroidir efficacement la ou les batteries. Le but de la présente invention est d'améliorer encore ledit dispositif. Ceci est réalisé, suivant l'invention, par un dispositif selon les caractéristiques de la revendication 1. De préférence, ladite boucle comporte une pompe pour faire circuler l'eau dans cette boucle.

L'eau circulant dans la boucle refroidie par le fluide frigorigène circulant dans l'échangeur, refroidit la ou les batteries, en captant les calories émises par ces dernières en les évacuant vers l'échangeur.

De préférence également, le dispositif comprend au moins une vanne pour fermer ou ouvrir la communication entre le circuit principal et le circuit de dérivation.

Cette vanne permet d'arrêter la circulation du fluide frigorigène dans le circuit de dérivation, lorsqu'il n'est pas nécessaire de refroidir les batteries ou lorsqu'il est nécessaire de privilégier le refroidissement de l'habitacle.

Cette vanne peut être située sur l'une des conduites du circuit de dérivation.

Suivant l'invention, l'échange thermique entre l'eau circulant dans ladite boucle et la ou les batteries est réalisé dans un circuit d'eau intégré dans la ou les batteries.

Suivant l'invention, ledit circuit d'eau est relié au reste de la boucle d'eau par des raccords amovibles permettant de connecter la ou les batteries à cette boucle d'eau et de les déconnecter de cette dernière.

Cette disposition permet de déconnecter et de reconnecter facilement les batteries pour assurer leur maintenance ou pour les remplacer.

Dans un mode de réalisation avantageux, le dispositif selon l'invention comprend un radiateur air-eau pour refroidir l'eau circulant dans ladite boucle.

Dans ce cas, ce radiateur peut soit contribuer au refroidissement de l'eau dans la boucle soit être utilisé seul pour refroidir cette eau, lorsqu'il est nécessaire de privilégier le refroidissement de l'habitacle en arrêtant la circulation du fluide frigorigène dans le circuit de dérivation de celui-ci.

Ce radiateur est de préférence placé à l'avant du véhicule pour favoriser l'échange thermique avec l'air extérieur et peut être relié à la boucle d'eau par deux conduites de dérivation.

Selon un autre aspect, l'invention concerne également un véhicule automobile, notamment un véhicule électrique équipé d'un dispositif de refroidissement selon l'invention.

D'autres particularités et avantages de l'invention apparaîtront encore tout au long de la description ci-après.

Aux dessins annexés, donnés à titre d'exemples, non limitatifs :
- la figure 2 est un schéma du dispositif de refroidissement selon l'invention,
- la figure 3 est un schéma d'un dispositif de refroidissement amélioré.

La figure 2 représente un dispositif pour refroidir les batteries 11 d'un véhicule automobile, en particulier d'un véhicule électrique comprenant, comme dans le cas de la figure 1, un climatiseur dans lequel l'évaporateur 1 situé dans l'habitacle 2 et le condenseur 3 situé à l'avant du véhicule sont reliés entre eux par un circuit principal comportant deux conduites 4, 5 dans lesquelles circule un fluide frigorigène, tel que du fréon.

Ce circuit principal est relié à un circuit de dérivation comprenant deux conduites 7, 8 pour acheminer le fluide frigorigène vers les batteries 11 pour refroidir celles-ci.

Conformément à l'invention, en amont des batteries 11 est disposé un échangeur 14 fluide frigorigène-eau adapté pour réaliser un échange thermique entre le fluide frigorigène circulant dans le circuit de dérivation 7, 8 et l'eau circulant dans une boucle 15, 16 disposée en condition d'échange thermique avec les batteries 11.

La boucle 15, 16 comporte une pompe 17 pour faire circuler l'eau dans cette boucle.

Le dispositif comprend de plus au moins une vanne 8a pour fermer ou ouvrir la communication entre le circuit principal 4, 5 et le circuit de dérivation 7, 8.

Cette vanne 8a est située au niveau du raccordement de la conduite 8 du circuit de dérivation avec le circuit principal.

L'échange thermique entre l'eau circulant dans la boucle 15, 16 et les batteries 11 est réalisé par contact direct entre cette eau et une ou plusieurs parois des batteries 11.

L'échange thermique entre l'eau circulant dans la boucle 15, 16 et les batteries 11 peut également être réalisé dans un circuit d'eau 18 intégré dans les batteries 11 de façon à optimiser l'échange thermique.

Comme montré par la figure 2, ledit circuit d'eau 18 est relié au reste de la boucle d'eau 15, 16 par des raccords amovibles 19, 20 permettant de connecter les batteries à cette boucle d'eau 15, 16 et de les déconnecter facilement de cette dernière.

Dans l'exemple représenté sur la figure 3, le dispositif de refroidissement comprend en outre un radiateur 21 air-eau pour refroidir l'eau circulant dans la boucle 15, 16.

Ce radiateur 21 est placé à l'avant du véhicule et est relié à la boucle d'eau 15, 16 par deux conduites de dérivation 22, 23.

On va maintenant expliquer en référence à la figure 3 le fonctionnement du dispositif de refroidissement que l'on vient de décrire.

Lorsque la vanne 8a est ouverte, le fluide frigorigène circule dans le circuit de dérivation 7, 8 grâce à la pompe 13 et refroidit l'échangeur 14.

L'eau circulant dans la boucle d'eau 15, 16 grâce à la pompe 17 est refroidie en passant dans l'échangeur 14.

Cette eau refroidie, refroidit les batteries 11 en circulant dans le circuit 18 intégré dans ces dernières.

Le dispositif de refroidissement permet ainsi d'éviter que la température des batteries dépasse une température de l'ordre de 40°C, tout en permettant de refroidir l'habitacle 2 lors de la circulation du véhicule.

Lorsque le véhicule est à l'arrêt, le dispositif permet également de refroidir efficacement les batteries 11 lors d'un cycle de recharge rapide de celles-ci.

Dans ce cas, il suffit de faire tourner le moteur du véhicule pour entraîner le compresseur 6.

Lors de cette opération, on peut fermer la vanne 8a pour éviter un refroidissement inutile de l'habitacle et privilégier le refroidissement des batteries 11.

Lors de la circulation ou lors d'un cycle de recharge des batteries, on peut augmenter l'efficacité du refroidissement des batteries 11, en mettant en circuit le radiateur 21 placé à l'avant du véhicule.

Ce radiateur 21 peut également être mis en service seul, c'est-à-dire, après fermeture de la vanne 8a du circuit de dérivation 7, 8 pour refroidir les batteries 11, notamment lorsque la température extérieure est relativement basse.

Le dispositif selon l'invention présente ainsi une grande souplesse d'utilisation.

Bien entendu, toutes les vannes et la pompe 17 de la boucle d'eau peuvent être commandées automatiquement suivant les modes de fonctionnement désirés, la température ambiante et la température des batteries.

## Revendications

1. Dispositif pour refroidir la ou les batteries (11) d'un véhicule automobile, en particulier d'un véhicule électrique, ce véhicule comprenant un climatiseur dans lequel l'évaporateur (1) et le condenseur (3) sont reliés entre eux par un circuit principal (4, 5) dans lequel circule un fluide frigorigène, ce circuit principal (4, 5) étant relié à un circuit de dérivation (7, 8) pour acheminer le fluide frigorigène vers la ou les batteries (11) pour refroidir celles-ci, ledit dispositif étant constitué de telle sorte qu'en amont de la ou des batteries (11) est disposé un échangeur fluide frigorigène-eau (14) adapté pour réaliser un échange thermique entre le fluide frigorigène circulant dans le circuit de dérivation (7, 8) et l'eau circulant dans une boucle (15, 16) disposée en condition d'échange thermique avec la ou les batteries (11), ledit dispostif étant **caractérisé en ce que** l'échange thermique entre l'eau circulant dans ladite boucle (15, 16) et la ou les batteries (11) est réalisé dans un circuit d'eau (18) intégré dans la ou les batteries (11), ledit circuit d'eau (18) étant relié au reste de la boucle d'eau (15, 16) par des raccords amovibles (19, 20) permettant de connecter la ou les batteries (11) à cette boucle d'eau (15, 16) et de les déconnecter de cette dernière.

2. Dispositif selon la revendication 1, **caractérisé en ce que** ladite boucle (15, 16) comporte une pompe (17) pour faire circuler l'eau dans cette boucle.

3. Dispositif selon l'une des revendications 1 ou 2, **caractérisé en ce qu'**il comprend au moins une vanne (8a) pour fermer ou ouvrir la communication entre le circuit principal (4, 5) et le circuit de dérivation (7, 8).

4. Dispositif selon la revendication 3, **caractérisé en ce que** ladite vanne (8a) est située sur le raccordement de l'une des conduites du circuit de dérivation (7, 8) avec le circuit principal.

5. Dispositif selon l'une des revendications 1 à 4, **caractérisé en ce qu'**il comprend un radiateur (21) air-eau pour refroidir l'eau circulant dans ladite boucle (15, 16).

6. Dispositif selon la revendication 5, **caractérisé en ce que** ledit radiateur (21) est placé à l'avant du véhicule et est relié à la boucle d'eau (15, 16) par deux conduites de dérivation (22, 23).

7. Véhicule automobile, notamment véhicule électrique équipé d'un dispositif de refroidissement selon l'une des revendications 1 à 6.

## Claims

1. Device for cooling the battery or batteries (11) of a motor vehicle, in particular of an electric vehicle, this vehicle comprising an air conditioner in which the evaporator (1) and the condenser (3) are connected together by a main circuit (4, 5) in which a coolant flows, this main circuit (4, 5) being connected to a branch circuit (7, 8) in order to convey the coolant to the battery or batteries (11) in order to cool the latter, said device being designed in such a way that upstream of the battery or batteries (11) is placed a coolant-water exchanger (14) suitable for carrying out a heat exchange between the coolant flowing in the branch circuit (7, 8) and the water flowing in a loop (15, 16) placed in condition of heat exchange with the battery or batteries (11), **characterized in that** the heat exchange between the water flowing in said loop (15, 16) and the battery or batteries (11) is carried out in a water circuit (18) incorporated into the battery or batteries (11), said water circuit (18) being connected to the rest of the water loop (15, 16) by removable connectors (19, 20) making it possible to connect the battery or batteries (11) to this water loop (15, 16) and to disconnect them from the latter.

2. Device according to Claim 1, **characterized in that** said loop (15, 16) comprises a pump (17) in order to cause the water to flow in this loop.

3. Device according to either of Claims 1 and 2, **characterized in that** it comprises at least one valve (8a) to close or open the communication between the main circuit (4, 5) and the branch circuit (7, 8).

4. Device according to Claim 3, **characterized in that** said valve (8a) is situated on the connection of one of the ducts of the branch circuit (7, 8) to the main circuit.

5. Device according to one of Claims 1 to 4, **characterized in that** it comprises an air-water radiator (21) in order to cool the water flowing in said loop (15, 16).

6. Device according to Claim 5, **characterized in that** said radiator (21) is placed at the front of the vehicle and is connected to the water loop (15, 16) by two branch ducts (22, 23).

7. Motor vehicle, notably an electric vehicle fitted with a cooling device according to one of Claims 1 to 6.

## Patentansprüche

1. Vorrichtung zum Kühlen der Batterie oder der Batterien (11) eines Kraftfahrzeugs, insbesondere eines Elektrofahrzeugs, wobei dieses Fahrzeug ein Klimagerät enthält, bei dem der Verdampfer (1) und der Kondensator (3) durch einen Hauptkreislauf (4, 5) miteinander verbunden sind, in dem eine Kühlflüssigkeit fließt, wobei dieser Hauptkreislauf (4, 5) mit einem Ableitungskreislauf (7, 8) verbunden ist, um die Kühlflüssigkeit zu der Batterie oder den Batterien (11) zu transportieren, um diese zu kühlen, wobei die Vorrichtung so gestaltet ist, dass vor der Batterie oder den Batterien (11) ein Kühlflüssigkeit-Wasser-Tauscher (14) angeordnet ist, der geeignet ist, um einen Wärmeaustausch zwischen der im Ableitungskreislauf (7, 8) fließenden Kühlflüssigkeit und dem in einer Schleife (15, 16) fließenden Wasser durchzuführen, die in einem Wärmeaustauschzustand mit der Batterie oder den Batterien (11) angeordnet ist, wobei die Vorrichtung **dadurch gekennzeichnet ist, dass** der Wärmeaustausch zwischen dem in der Schleife (15, 16) fließenden Wasser und der Batterie oder den Batterien (11) in einem Wasserkreislauf (18) durchgeführt wird, der in die Batterie oder die Batterien (11) integriert ist, wobei der Wasserkreislauf (18) mit dem Rest der Wasserschleife (15, 16) durch lösbare Anschlüsse (19, 20) verbunden ist, die es ermöglichen, die Batterie oder die Batterien (11) mit dieser Wasserschleife (15, 16) zu verbinden und sie von dieser letzteren zu trennen.

2. Vorrichtung nach Anspruch 1, **dadurch gekennzeichnet, dass** die Schleife (15, 16) eine Pumpe (17) aufweist, um das Wasser in dieser Schleife fließen zu lassen.

3. Vorrichtung nach einem der Ansprüche 1 oder 2, **dadurch gekennzeichnet, dass** sie mindestens ein Ventil (8a) enthält, um die Verbindung zwischen dem Hauptkreislauf (4, 5) und dem Ableitungskreislauf (7, 8) zu schließen oder zu öffnen.

4. Vorrichtung nach Anspruch 3, **dadurch gekennzeichnet, dass** das Ventil (8a) sich auf der Verbindung einer der Leitungen des Ableitungskreislaufs (7, 8) mit dem Hauptkreislauf befindet.

5. Vorrichtung nach einem der Ansprüche 1 bis 4, **dadurch gekennzeichnet, dass** sie einen Luft-Wasser-Kühler (21) enthält, um das in der Schleife (15, 16) fließende Wasser zu kühlen.

6. Vorrichtung nach Anspruch 5, **dadurch gekennzeichnet, dass** der Kühler (21) an der Vorderseite des Fahrzeugs angeordnet und mit der Wasserschleife (15, 16) durch zwei Ableitungsleitungen (22, 23) verbunden ist.

7. Kraftfahrzeug, insbesondere Elektrofahrzeug, das mit einer Kühlvorrichtung nach einem der Ansprüche 1 bis 6 ausgestattet ist.
